# EUROPEAN PATENT SPECIFICATION

(11) **EP 1 244 948 B1**
(45) Date of publication and mention of the grant of the patent: **02.11.2005**
(21) Application number: 00947055.0
(22) Date of filing: 06.07.2000
(51) Int. Cl.: G05D 23/13

(54) **THERMOSTATIC MIXING DEVICE WITH ARRANGEMENT TO INCREASE MIXING**
THERMOSTATISCHE MISCHVORRICHTUNG MIT EINER MISCHVERMEHRUNGSVORRICHTUNG
MELANGEUR THERMOSTATIQUE DOTE D'UN AGENCEMENT CONCU POUR AUGMENTER LE MELANGE

(30) Priority: 06.07.1999 IT TO990581
(43) Date of publication of application: 02.10.2002
(73) Proprietor: MASCO CORPORATION, Taylor, MI 48180 (US)
(72) Inventor: KNAPP, Francesco, I-27061 Cava Manara (IT)
(74) Representative: Oppermann, Mark
(86) International application number: PCT/US2000/018466
(87) International publication number: WO 2001/002923

(56) References cited:
- GB-A- 2 329 691
- US-A- 3 388 861
- US-A- 3 827 016
- US-A- 3 955 759
- US-A- 4 760 953
- US-A- 5 135 163
- US-A- 5 356 074
- US-A- 5 379 936
- US-A- 5 400 961

## Description

### TECHNICAL FIELD

This invention relates to a thermostatic mixing valve according to the preamble portion of claim 1, and more particularly to a construction within a thermostatic valve that increases mixing of cold and hot water supplied to the mixing chamber.

### BACKGROUND OF THE INVENTION

Hot water and cold water supplied to a thermostatic mixing valve must be efficiently mixed in order for a thermostatic mixing valve to optimally perform its thermostatic function. The water must be sufficiently mixed before it comes into contact with the thermostatic element which controls the operation of the thermostatic valve. Commonly the thermostatic element includes a wax filled case and a piston which is moved by thermal expansion of the contained wax. Consequently, in many better quality thermostatic mixing valves, structures are introduced to promote early and complete mixing of the cold water and hot water supplied to the mixing device before the mixed water comes into contact with the case.

Document DE-C-44 23 240 discloses a disc mounted on the thermostatic element. The disc periphery is located close to the hot water intake apertures located in the perimeter wall of the mixing chamber. The cold water enters the mixing chamber via a narrow space between the periphery of the disc and the perimeter wall of the mixing chamber. In this way, the two currents of cold water and hot water meet at right angles to each other to provide a certain level of mixing. However, this known construction has some disadvantages. First of all, an additional element in the form of a disc is introduced which increases the cost of manufacture and complicates assembly of the thermostatic mixing device. In addition, the disc needs to be positioned to form a narrow annular space within the mixing chamber adjacent the perimeter wall of the mixing chamber thereby calling for the necessity of precise manufacturing tolerances, especially with regards to the centering of the disc. Furthermore, the necessity for the space to be narrow in order to be effective undesirably reduces in the maximum flow rate provided by the mixing device.

Finally, the pressure drop due to the passage of the cold water through the narrow space gives rise to a force which applies a dynamic drag to the disc. The dynamic drag acts against the biasing spring in the thermostatic system and interferes with its operation which may cause instability in some particular circumstances.

Document US-A-5 356 074 forming the preamble portion of claim 1 discloses a fluid mixing device which can adjust for temperature fluctuations of fluids. According to this state of the art a thermal expansion element drives a reciprocating disk member with a portion which extends into and preferably through a common inlet for introducing hot and cold water into a cavity. This feature provides advantages in mixing the flow of the hot and cold water prior to contact with the thermal expansion element. Its design also reduces inertial forces to move the disk member as only a single seal is required.

What is needed is a thermostatic mixing valve construction capable of effectively promoting early mixing of the cold water and the hot water supplied to a mixing device by a particular arrangement of existing elements without the addition of an added element. What is also needed is a construction that does not require overly precise manufacturing tolerances or does not appreciably increases the cost of production of a thermostatic mixing device. Another need is to reduce the phenomenon of dynamic dragging to the point where it becomes negligible in such a thermostatic valve and where the construction does not impose restrictive limits on the maximum flow rate admitted by the mixing valve.

### SUMMARY OF THE INVENTION

The above objects are solved by the features indicated in claim 1. Advantageously developed embodiments are subject-matter of the dependent claims 2 to 8.

According to the invention, in a thermostatic mixing valve which includes a housing with an inlet passage for hot water, an inlet passage for cold water, a mixing chamber in communication with the inlet passages, and an outlet for discharging mixed water from the mixing chamber, as well as a thermostatically controlled slide valve slidably mounted in the mixing chamber, for controlling the extent of opening and closing of the inlet passages, wherein a partition is located in the mixing chamber within the slide valve between the inlet passages, the partition being affixedly connected to the slide valve, wherein a spring is located in the housing and connected to the slide valve to bias the slide valve in a direction corresponding to an opening of the inlet passage for hot water and to a closing of the inlet passage for cold water, wherein a thermostatic element operating by thermal expansion is operably interposed between the partition and the housing to assist the slide valve to move in a direction corresponding to a closing of the inlet passage for hot water and to an opening of the inlet passage for cold water when the thermostatic element undergoes thermal expansion, wherein a crossing passage is provided in the partition for allowing water from the inlet passage for cold water to pass the partition in the slide valve, and wherein the inlet passage for hot water has a surface inclined to direct water centering therethrough toward the partition; the inclined surface has an inner periphery which is longitudinally aligned with the crossing passage in the partition such that the inner periphery directly opposes the crossing passage.

Preferably the slide valve is annular in shape about a central axis, with the inlet passage for hot water and the inlet passage for cold water being circumferentially arcuate about the central axis, wherein the partition has a plurality of crossing passages circumferentially spaced in proximity to the periphery of the partition, and wherein the inclined surface is annular in shape. In one embodiment, the inclined surface is substantially rectilinear in section and forms a frusto-conical surface. In another embodiment, the inclined surface is curvilinear in section and forms part of a toroidal surface.

In one embodiment the housing includes a body member which houses an inlet port operably connected to the inlet passage for hot water and an inlet port operably connected to the inlet passage for cold water, a first insert member and a second insert member which are arranged in the body member, and a perimeter wall defining the mixing chamber, wherein the inlet passage for cold water is located between the perimeter wall and the first insert member, wherein the inlet passage for hot water is located between the perimeter wall and the second insert member, and wherein the inclined surface is formed on the second insert member.

Preferably the slide valve is slidably movable in relation to the perimeter wall.

Further, the perimeter wall and the partition may be formed in a separate member mounted in the body member, wherein the separate member, and the first and second insert members are connected together to form a cartridge assembly which houses the thermostatic element and the spring.

Finally, it is desirable that an inner facing peripheral surface of the second insert member is interposed between the inclined surface and the outlet for discharging mixed water from the mixing chamber, and is inclined in a direction away from the central axis as its distance from the partition increases.

Because of the above described conditions, the cold water which enters the mixing valve and passes through the slidable valve is admitted to the mixing chamber via the peripheral passages of the partition, preferably in the form of several substantially parallel jets which are close to the perimeter wall of the mixing chamber. Hot water which enters the mixing valve and comes through the slide valve is admitted to the mixing chamber in contact with the inclined surface and consequently flows in a direction which is towards the interior and towards the partition. In this way the flow of hot water encounters the flow of cold water presenting an axial component of opposed velocities so that a high turbulence is generated which causes very effective mixing of the hot and cold flows before they come into contact with the thermostatic element.

This effect is obtained without introducing complexity by any additional elements or without causing any major problems in construction or assembly. Since the passages which cross the partition may be of any size, at least within certain limits, the arrangement does not cause any restriction in the maximum flow rate admitted by the thermostatic mixing valve. The cold water encounters less hindrance to its passage and does not undesirably provide any significant dynamic drag. The construction according to the invention does not entail any critical relative position of parts, and therefore does not entail the necessity of undesirably precise manufacturing tolerances.

Finally, the inner facing peripheral surface of the second insert member which may also be inclined as described, causes a cavitation which, in its turn, then increases the turbulence, which makes mixing more effective.

### BRIEF DESCRIPTION OF THE DRAWINGS

Reference now is made to the accompanying drawings in which:
Figure 1 is a fragmentary segmented view of a thermostatic mixing valve in accordance with one embodiment of the invention;
Figure 2 is an enlarged view the portion of the thermostatic valve in the area denoted by the oval shown as A in Figure 1;
Figure 3 is a view similar to Figure 2 illustrating an altemative embodiment of the invention;
Figure 4 is a view similar to Figure 2 illustrating another embodiment of the invention;
Figure 5 is a view similar to Figure 2 illustrating another embodiment of the invention;
Figure 6 is a view similar to Figure 1 illustrating a cartridge format of the invention;
Figure 7 is a view similar to Figure 1 illustrating another embodiment of the invention;
Figure 8 is a view similar to Figure 1 illustrating another modification; and
Figure 9 is a view similar to Figure 1 illustrating another embodiment of the invention.

### DETAILED DESCRIPTION OF THE PREFERRED EMBODIMENTS

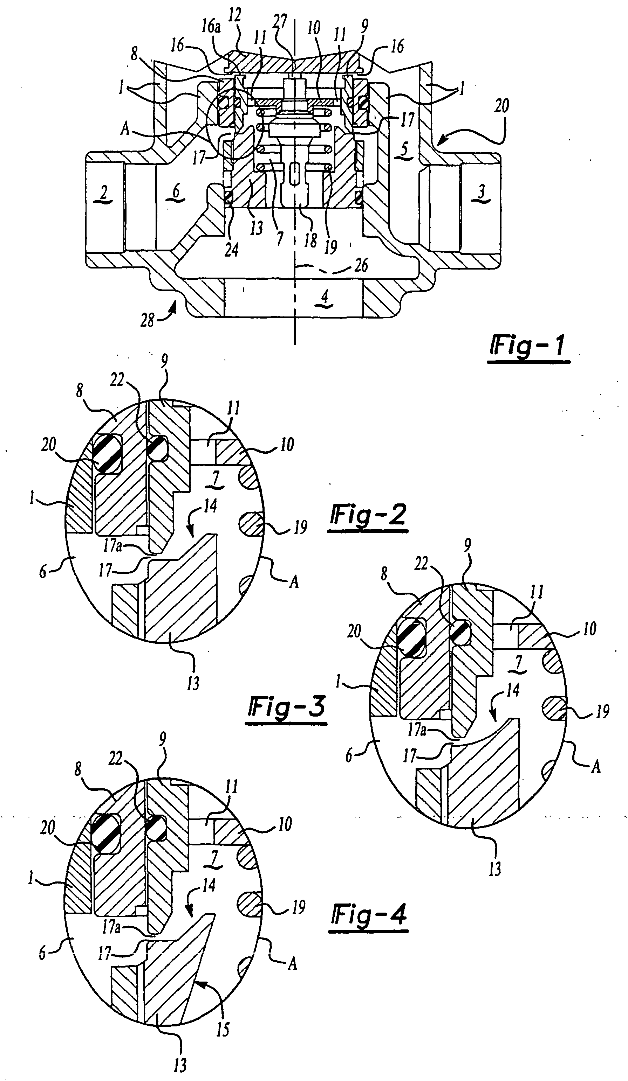

Referring now to Figure 1, a fragmentary view of a thermostatic mixing valve is shown incorporating one embodiment of the invention. The operating handle and safety components and components in the lower part to adapt the thermostatic mixing valve to a faucet tap are not shown and form no part of the invention. The valve includes a body 1 with an inlet port 2 for intake of hot water, an inlet port 3 for intake of cold water, and an outlet or discharge port 4 for delivery of mixed water at a regulated temperature. Connecting conduits 5 and 6 run from respective ports 2 and 3 to carry the hot water and water to a mixing chamber 7.

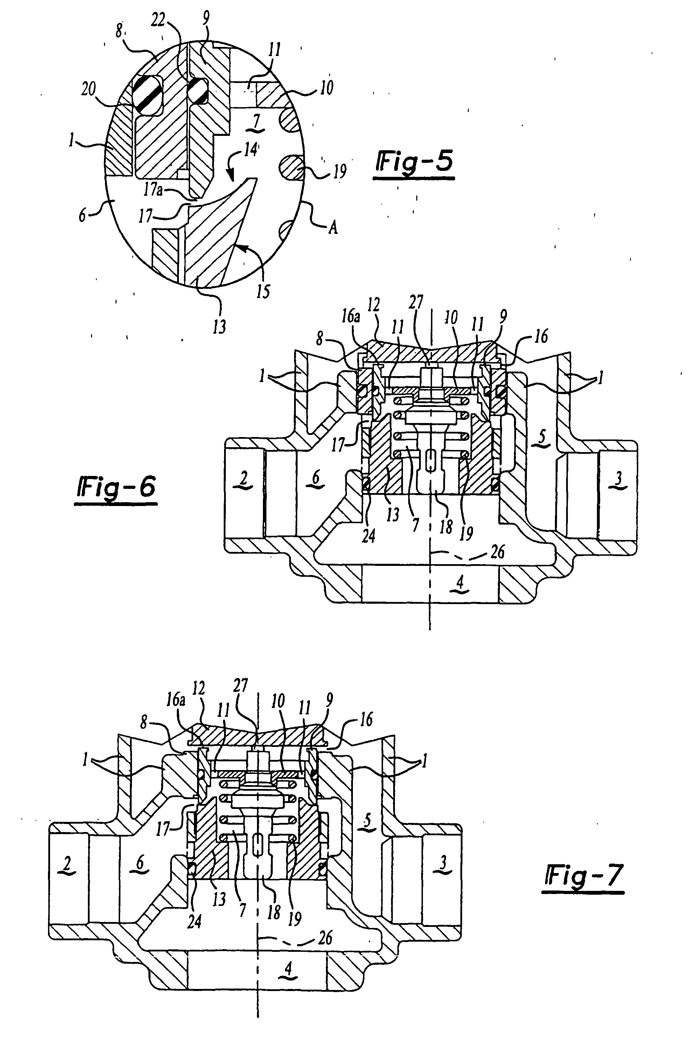

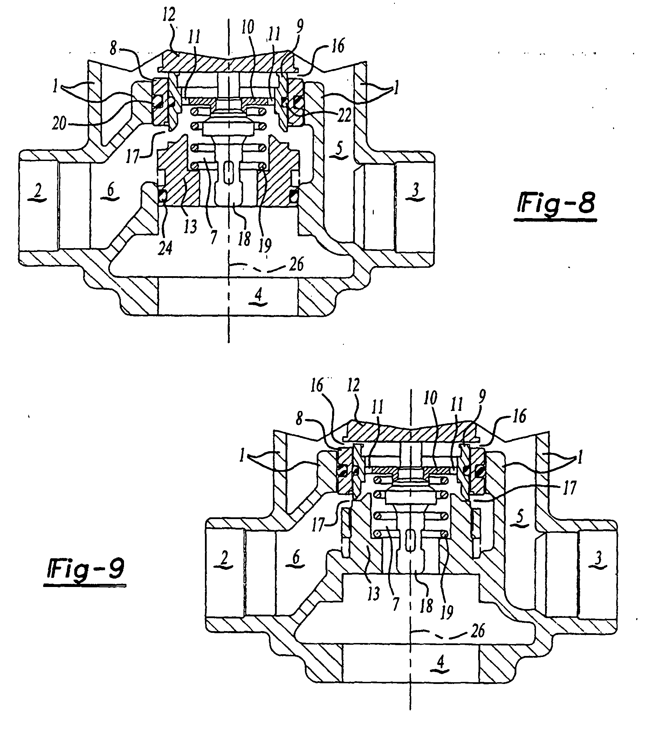

The mixing chamber 7 is defined by a perimeter member wall 8 that can be annular in shape. The wall member 8 slideably seats a valve 9 that carries a partition 10. In addition, the thermostatic valve has a first stationary insert member 12 and a second stationary insert member 13. The insert members 12 and 13 have generally annular perimeters. In operating conditions, the stationary insert members 12 and 13 and the perimeter wall member 8 of the mixing chamber are statically secured together in body 1. One or more of the stationary insert members 12 and 13 can, if desired, be constructed integrally as one piece with the perimeter wall member 8 of the mixing chamber. Figure 8 illustrates where insert 13 is formed integrally with wall member 8. Alternatively, one of the insert members may be integrally formed with body 1. Figure 9 illustrates an embodiment where insert 13 is formed integrally with body 1. Conventional sealing devices 20, 22, 24 are placed between the various parts described in an already well known manner. The perimeter member wall 8 of the mixing chamber and the two stationary inserts 12 and 13 may be attached to each other firmly, so that they can be installed in or removed from body 1 as a cartridge unit as illustrated in Figure 6. The outer shell of the cartridge may be formed by the wall 8, as in the embodiment shown. Alternatively, the inserts 12 and 13 may also be mounted directly in body I where in this case the peripheral wall member 8 of the mixing chamber may be integrally formed with the body 1 itself as illustrated in Figure 7. The body 1, installed insert members 12 and 13, and wall member 8 can be referred together as the housing

Passages 16 are located between the first stationary component 12 and the perimeter wall member 8. The passages 16 allow the cold water to flow from connecting conduit 5 towards the interior of the mixing chamber 7. Passages 17 are located between the second stationary component 13 and the perimeter wall 8. The passages 17 allow the hot water to flow from connecting conduit 6 towards the interior of the mixing chamber 7. Passages 16 and 17 can be arcuate in shape circumferentially extending about the central axis 26. In one embodiment, passages 16 and 17 can be annular in shape completely surrounding central axis 26. The adjustable gaps 16a and 17a for the flow of water from passages 16 for the cold water and from passages 17 for the hot water are controlled in a manner already well-known by the sliding movement of the slide valve 9 axially between inserts 12 and 13 in response to various already well-known operating criteria for the thermostatic mixing valve.

A thermostatic element 18 of the type which operates by thermal expansion is mounted to partition 10 of the valve 9. Its moving element or piston 27 acts against the first stationary component 12 by means of safety elements which can also be of any kind and are already well-known and not shown for simplicity of the drawing. The thermostatic element 18 extends into the mixing chamber 7 and registers the temperature of the mixed water therein and expands or contracts correspondingly. The thermostatic element 18 expands due to an increase in the temperature of the mixed water which is in contact with it. The thermostatic element 18 causes the valve 9 secured with partition 10 to move in the direction which will reduce the clearance gap 17a for intake of hot water and increase the clearance of gap 16a for intake of cold water so as to hinder an increase in the temperature of the mixed water and consequently stabilize the temperature.

A spring 19, inserted between the second stationary component 13 and the partition 10 assists the valve 9 to move as the thermostatic element 18 contracts to carry out the opposite regulation to that described above when the temperature of the mixed water is decreasing. In other possible forms of embodiment, the spring 19 acts both on the partition of the valve and on any other part secured to the valve, for example, the thermostatic element 18 itself.

Crossing passages 11 are peripherally located in partition 10 of valve 9. Cold water from intake passages 16 must run through crossing passages 11 to reach the mixing chamber 7. The cold water therefore enters the mixing chamber in the form of many substantially parallel jets close to the perimeter wall member 8 in an axially directed velocity away from partition 10.

The stationary insert member 13 which defines the intake passages 17 for hot water has at least one internal surface 14 which is inclined towards the central axis 26 of the interior of the mixing chamber 7 and towards the partition 10. The flow of hot water which enter the mixing chamber 7 is directed by this inclined surface 14 and therefore possesses a component of velocity directed radially towards the interior center axis 26 and a component of velocity directed axially towards the partition 10.

The flow of hot water directed in this way then encounters the flow of cold water entering from crossing passages 11, the velocity being directed axially in the opposite direction to the axial component of velocity of hot water. This encounter therefore gives rise to powerful turbulence and consequently to very efficient mixing which takes place in the peripheral area of the mixing chamber 7 before the mix of water comes into contact with the centrally located thermostatic element 18. The thorough mixture of water provides improved operation of the thermostatic mixing valve.

The part of the inclined surface 14 of the second stationary insert member 13 may be, in section, substantially rectilinear, as shown in Figures 1, 2, and 4 such that the inclined surface forms part of a substantially frusto-conical surface. Alternatively, the inclined surface 14 of the second stationary component 13 maybe, in section, curvilinear, as shown in Figures 3 and 5, so that the inclined surface forms part of a substantially toridal surface. But the surface 14 may also in fact have various other shapes provided that it includes an inclination towards the central axis 26 of the mixing chamber 7 and towards the partition 10.

Figures 4 and 5 show a structure for further intensifying the turbulence in the mixing area and thus the efficiency of mixing of hot water and cold water which is obtained. An internal peripheral wall 15 of the second stationary insert member 13 has an inclination in a direction which will present at every point an increase in the distance from the axis 26 to the device as the distance from the partition 10 increases. This arrangement causes a cavitation in the flow of mixed water which, after entering the mixing chamber 7, is directed towards the discharge outlet 4 with a consequent increase in the turbulence and the efficiency of the mixing. As has already been stated in relation to the inclined surface 14, the inclined surface 15 can also be substantially rectilinear in section, as shown in Figure 4, or may be curvilinear or of another shape than that shown as long as the cross sectional area of the cavity increases as distance from 10 increases.

## Claims

1. A thermostatic mixing valve, comprising:
a housing with an inlet passage (17) for hot water, an inlet passage (16) for cold water, a mixing chamber (7) in communication with said inlet passages (16, 17), and an outlet (4) for discharging mixed water from said mixing chamber (7); and
a thermostatically controlled slide valve (9) slidably mounted in said mixing chamber (7), for controlling the extent of opening and closing of said inlet passages (16, 17);
wherein a partition (10) is located in said mixing chamber (7) within said slide valve (9) between said inlet passages (16, 17), said partition (10) being affixedly connected to said slide valve (9);
wherein a spring (19) is located in said housing and connected to said slide valve (9) to bias said slide valve (9) in a direction corresponding to an opening of said inlet passage (17) for hot water and to a closing of said inlet passage (16) for cold water;
wherein a thermostatic element (18) operating by thermal expansion is operably interposed between said partition (10) and said housing to assist said slide valve (9) to move in a direction corresponding to a closing of said inlet passage (17) for hot water and to an opening of said inlet passage (16) for cold water when said thermostatic element (18) undergoes thermal expansion;
wherein a crossing passage (11) is provided in said partition (10) for allowing water from the inlet passage (16) for cold water to pass said partition (10) in said slide valve (9); and
wherein the inlet passage (17) for hot water has a surface (14) inclined to direct water centering therethrough toward said partition (10);
**characterized in that** said inclined surface (14) has an inner periphery which is longitudinally aligned with said crossing passage (11) in said partition (10) such that said inner periphery directly opposes said crossing passage (11).

2. The thermostatic mixing valve according to claim 1,
**characterized in that** said slide valve (9) is annular in shape about a central axis (26), with said inlet passage (17) for hot water and said inlet passage (16) for cold water being circumferentially arcuate about said central axis (26);
wherein said partition (10) has a plurality of crossing passages (11) circumferentially spaced in proximity to the periphery of said partition (10); and
wherein said inclined surface (14) is annular in shape.

3. The thermostatic mixing valve according to claim 1 or 2, **characterized in that** said inclined surface (14) is substantially rectilinear in section and forms a frusto-conical surface.

4. The thermostatic mixing valve according to claim 1 or 2, **characterized in that** said inclined surface (14) is curvilinear in section and forms part of a toroidal surface.

5. The thermostatic mixing valve according to one of the preceding claims, **characterized in that** said housing includes:
a body member (1) which houses an inlet port (2) operably connected to said inlet passage (17) for hot water and an inlet port (3) operably connected to said inlet passage (16) for cold water;
a first insert member (12) and a second insert member (13) which are arranged in said body member (1); and
a perimeter wall (8) defining said mixing chamber (7);
wherein said inlet passage (16) for cold water is located between said perimeter wall (8) and said first insert member (12);
wherein said inlet passage (17) for hot water is located between said perimeter wall (8) and said second insert member (13); and
wherein said inclined surface (14) is formed on said second insert member (13).

6. The thermostatic mixing valve according to claim 5,
**characterized in that** said slide valve (9) is slidably movable in relation to said perimeter wall (8).

7. The thermostatic mixing valve according to claim 6,
wherein said perimeter wall (8) and said partition (10) are formed in a separate member mounted in said body member (1); and
wherein said separate member, and said first and second insert members (12, 13) are connected together to form a cartridge assembly which houses said thermostatic element (18) and said spring (19).

8. The thermostatic mixing valve according to claim 5, wherein an inner facing peripheral surface (15) of said second insert member (13) is interposed between said inclined surface (14) and said outlet (4) for discharging mixed water from said mixing chamber (7), and is inclined in a direction away from said central axis (26) as its distance from said partition (10) increases.

## Patentansprüche

1. Thermostatisches Mischventil, umfassend:
ein Gehäuse mit einem Einlaßdurchgang (17) für Warmwasser, einem Einlaßdurchgang (16) für Kaltwasser, einer Mischkammer (7), die mit den Einlaßdurchgängen (16, 17) in Verbindung steht, und einem Auslaß (4) zur Abgabe von Mischwasser aus der Mischkammer (7); und
ein thermostatisch gesteuertes Schieberventil (9), das in der Mischkammer (7) verschiebbar montiert ist, um die Größe der Öffnung und Schließung der Einlaßdurchgänge (16, 17) zu steuern;
wobei eine Zwischenwand (10) in der Mischkammer (7) in dem Schieberventil (9) zwischen den Einlaßdurchgängen (16, 17) angeordnet ist, wobei die Zwischenwand (10) fest mit dem Schieberventil (9) verbunden ist;
wobei eine Feder (19) in dem Gehäuse angeordnet und mit dem Schieberventil (9) verbunden ist, um das Schieberventil (9) in eine Richtung vorzuspannen, die einer Öffnung des Einlaßdurchgangs (17) für Warmwasser und einer Schließung des Einlaßdurchgangs (16) für Kaltwasser entspricht;
wobei ein durch Wärmeausdehnung arbeitendes thermostatisches Element (18) zwischen der Zwischenwand (10) und dem Gehäuse wirksam zwischengeschaltet ist, um das Schieberventil (9) dabei zu unterstützen, sich in einer Richtung zu bewegen, die einer Schließung des Einlaßdurchgangs (17) für Warmwasser und einer Öffnung des Einlaßdurchgangs (16) für Kaltwasser entspricht, wenn das thermostatische Element (18) eine Wärmeausdehnung erfährt;
wobei ein Kreuzungsdurchgang (11) in der Zwischenwand (10) vorgesehen ist, um es dem Wasser aus dem Einlaßdurchgang (16) für Kaltwasser zu ermöglichen, die Zwischenwand (10) in dem Schieberventil (9) zu passieren; und
wobei der Einlaßdurchgang (17) für Warmwasser eine Fläche (14) hat, die schräg verläuft, um das hindurchfließende Wasser in Richtung der Zwischenwand (10) zu leiten;
**dadurch gekennzeichnet, daß** die schräge Fläche (14) einen Innenumfang hat, der mit dem Kreuzungsdurchgang (11) in der Zwischenwand (10) längs ausgefluchtet ist, so daß der Innenumfang dem Kreuzungsdurchgang (11) direkt gegenüberliegt.

2. Thermostatisches Mischventil nach Anspruch 1, **dadurch gekennzeichnet, daß** das Schieberventil (9) ringförmig um eine Mittelachse (26) ist, wobei der Einlaßdurchgang (17) für Warmwasser und der Einlaßdurchgang (16) für Kaltwasser bezüglich der Mittelachse (26) umfangsseitig gewölbt sind;
wobei die Zwischenwand (10) eine Mehrzahl von Kreuzungsdurchgängen (11) aufweist, die nahe der Außenfläche der Zwischenwand (10) in Umfangsrichtung beabstandet sind; und
wobei die schräge Fläche (14) ringförmig ist.

3. Thermostatisches Mischventil nach Anspruch 1 oder 2, **dadurch gekennzeichnet, daß** die schräge Fläche (14) im Querschnitt gesehen im wesentlichen geradlinig ist und eine kegelstumpfförmige Fläche bildet.

4. Thermostatisches Mischventil nach Anspruch 1 oder 2, **dadurch gekennzeichnet, daß** die schräge Fläche (14) im Querschnitt gesehen gekrümmt ist und einen Teil einer Torusfläche bildet.

5. Thermostatisches Mischventil nach einem der vorhergehenden Ansprüche, **dadurch gekennzeichnet, daß** das Gehäuse umfaßt:
ein Körperteil (1), das eine mit dem Einlaßdurchgang (17) für Warmwasser wirkverbundene Einlaßöffnung (2) und eine mit dem Einlaßdurchgang (16) für Kaltwasser wirkverbundene Einlaßöffnung (3) enthält;
ein erstes Einsatzteil (12) und ein zweites Einsatzteil (13), die in dem Körperteil (1) angeordnet sind; und
eine die Mischkammer (7) begrenzende Umfangswand (8);
wobei der Einlaßdurchgang (16) für Kaltwasser zwischen der Umfangswand (8) und dem ersten Einsatzteil (12) liegt;
wobei der Einlaßdurchgang (17) für Warmwasser zwischen der Umfangswand (8) und dem zweiten Einsatzteil (13) liegt; und
wobei die schräge Fläche (14) an dem zweiten Einsatzteil (13) ausgebildet ist.

6. Thermostatisches Mischventil nach Anspruch 5, **dadurch gekennzeichnet, daß** das Schieberventil (9) bezüglich der Umfangswand (8) gleitbeweglich ist.

7. Thermostatisches Mischventil nach Anspruch 6,
wobei die Umfangswand (8) und die Zwischenwand (10) an einem separaten Teil ausgebildet sind, das in dem Körperteil (1) montiert ist; und
wobei das separate Teil, und das erste und zweite Einsatzteil (12, 13) miteinander verbunden sind, um eine Kartuschenbaugruppe zu bilden, die das thermostatische Element (18) und die Feder (19) enthält.

8. Thermostatisches Mischventil nach Anspruch 5, wobei eine nach innen gewandte Umfangsfläche (15) des zweiten Einsatzteils (13) zwischen der schrägen Fläche (14) und dem Auslaß (4) zur Abgabe des Mischwassers aus der Mischkammer (7) zwischengefügt ist, und mit zunehmendem Abstand von der Zwischenwand (10) in einer Richtung weg von der Mittelachse (26) geneigt ist.

## Revendications

1. Robinet mélangeur thermostatique, comprenant :
un logement ayant un passage d'entrée (17) pour l'eau chaude, un passage d'entrée (16) pour l'eau froide, une chambre de mélange (7) en communication avec lesdits passages d'entrée (16, 17), et un orifice de sortie (4) pour évacuer l'eau mélangée de ladite chambre de mélange (7) ; et
un tiroir contrôlé de manière thermostatique (9) monté de manière coulissante dans ladite chambre de mélange (7), pour contrôler le degré d'ouverture et de fermeture desdits passages d'entrée (16 ; 17) ;
dans lequel une partition (10) est située dans ladite chambre de mélange (7) dans ledit tiroir (9) entre lesdits passages d'entrée (16, 17), ladite partition (10) étant connectée de manière fixe audit tiroir (9) ;
dans lequel un ressort (19) est situé dans ledit logement et connecté audit tiroir (9) pour incliner ledit tiroir (9) dans une direction correspondant à une ouverture dudit passage d'entrée (17) pour l'eau chaude et à une fermeture dudit passage d'entrée (16) pour l'eau froide ;
dans lequel un élément thermostatique (18) fonctionnant par expansion thermique est interposé de manière opérationnelle entre ladite partition (10) et ledit logement pour aider ledit tiroir (9) à se déplacer dans une direction correspondant à une fermeture dudit passage d'entrée (17) pour l'eau chaude et à une ouverture dudit passage d'entrée (16) pour l'eau froide lorsque ledit élément thermostatique (18) subit une expansion thermique ;
dans lequel un passage de franchissement (11) est fourni dans ladite partition (10) pour permettre à l'eau provenant du passage d'entrée (16) pour l'eau froide de franchir ladite partition (10) dans ledit tiroir (9) ; et
dans lequel le passage d'entrée (17) pour l'eau chaude a une surface (14) inclinée pour diriger l'eau entrant par celui-ci vers ladite partition (10) ;
**caractérisé en ce que** ladite surface inclinée (14) a une périphérie intérieure qui est longitudinalement alignée avec ledit passage de franchissement (11) dans ladite partition (10) de sorte que ladite périphérie intérieure soit directement en face dudit passage de franchissement (11).

2. Robinet mélangeur thermostatique selon la revendication 1, **caractérisé en ce que** ledit tiroir (9) a une forme annulaire autour d'un axe central (26), ledit passage d'entrée (17) pour l'eau chaude et ledit passage d'entrée (16) pour l'eau froide étant circonférentiellement courbes autour dudit axe central (26) ;
dans lequel ladite partition (10) a une pluralité de passages de franchissement (11) espacés de manière circonférentielle à proximité de la périphérie de ladite partition (10) ; et
dans lequel ladite surface inclinée (14) a une forme annulaire.

3. Robinet mélangeur thermostatique selon la revendication 1 ou 2, **caractérisé en ce que** ladite surface inclinée (14) est sensiblement rectiligne en coupe et forme une surface tronconique.

4. Robinet mélangeur thermostatique selon la revendication 1 ou 2, **caractérisé en ce que** ladite surface inclinée (14) est curviligne en coupe et fait partie d'une surface toroïdale.

5. Robinet mélangeur thermostatique selon l'une des revendications précédentes, **caractérisé en ce que** ledit logement comprend :
un élément de corps (1) qui accueille un orifice d'entrée (2) connecté de manière opérationnelle audit passage d'entrée (17) pour l'eau chaude et un orifice d'entrée (3) connecté de manière opérationnelle audit passage d'entrée (16) pour l'eau froide ;
un premier élément dinsert (12) et un second élément d'insert (13) qui sont agencés dans ledit élément de corps (1) ; et
une paroi de périmètre (8) définissant ladite chambre de mélange (7) ;
dans lequel ledit passage d'entrée (16) pour l'eau froide est situé entre ladite paroi de périmètre (8) et ledit premier élément d'insert (12);
dans lequel ledit passage d'entrée (17) pour l'eau chaude est situé entre ladite paroi de périmètre (8) et ledit second élément d'insert (13) ; et
dans lequel ladite surface inclinée (14) est formée sur ledit second élément d'insert (13).

6. Robinet mélangeur thermostatique selon la revendication 5, **caractérisé en ce que** ledit tiroir (9) se déplace de manière coulissante par rapport à ladite paroi de périmètre (8).

7. Robinet mélangeur thermostatique selon la revendication 6,
dans lequel ladite paroi de périmètre (8) et ladite partition (10) sont formées en un élément séparé monté dans ledit élément de corps (1) ; et
dans lequel ledit élément séparé, et lesdits premier et second éléments d'insert (12, 13) sont connectés ensemble pour former un ensemble de cartouche qui accueille ledit élément thermostatique (18) et ledit ressort (19).

8. Robinet mélangeur thermostatique selon la revendication 5,
dans lequel une surface périphérique orientée vers l'intérieur (15) dudit second élément d'insert (13) est interposée entre ladite surface inclinée (14) et ledit orifice de sortie (4) pour évacuer l'eau mélangée de ladite chambre de mélange (7), et est inclinée dans une direction s'éloignant dudit axe central (26) au fur et à mesure que sa distance par rapport à ladite partition (10) augmente.
